# EUROPÄISCHE PATENTSCHRIFT

(11) **EP 1 122 140 B1**
(45) Veröffentlichungstag und Bekanntmachung des Hinweises auf die Patenterteilung: **15.11.2006**
(21) Anmeldenummer: 01100149.2
(22) Anmeldetag: 16.01.2001
(51) Int. Cl.: B60T 11/32, B60T 17/02

(54) **Druckluftversorgungseinrichtung für Fahrzeug-Druckluftanlagen**
Compressed-air supply device for vehicle compressed air systems
Installation d'alimentation en air comprimé pour systèmes à air comprimé de véhicules

(30) Priorität: 31.01.2000 DE 10004091
(43) Veröffentlichungstag der Anmeldung: 08.08.2001
(73) Patentinhaber: KNORR-BREMSE SYSTEME FÜR NUTZFAHRZEUGE GMBH, 80809 München (DE)
(72) Erfinder: Hilberer, Eduard, 68766 Hockenheim (DE)

(56) Entgegenhaltungen:
- EP-A- 0 689 117
- WO-A-96/34785
- DE-A- 19 834 705

## Beschreibung

Die Erfindung betrifft eine Druckluftversorgungseinrichtung für Fahrzeug-Druckluftanlagen umfassend ein Mehrkreisschutzventil, einen Druckregler, eine Versorgungsleitung zur Versorgung der Kreise des Mehrkreisschutzventils mit Druckluft, und einen Kompressor, der mittels einer pneumatischen Schaltvorrichtung schaltbar ist.

Derartige Druckluftversorgungseinrichtungen sind bekannt. Beispielsweise ist eine derartige Druckluftversorgungseinrichtung aus der DE 198 34 705.7 der gleichen Anmelderin bekannt. Bei der aus der DE 198 34 705.7 bekannten Druckluftversorgungseinrichtung für Fahrzeug-Druckluftanlagen wird ein pneumatisches Stellglied, das einen Schaltkompressor schaltet über ein Vorsteuerventil gesteuert, das ausschließlich hierfür Verwendung findet. Der Druckregler wird hingegen von einem anderen Ventil, nämlich einem Magnetventil gesteuert. Das Vorsteuerventil, das das Stellglied des Schaltkompressors steuert, wird über eine Vorsteuerventilversorgungsleitung mit Druckluft versorgt und steuert das Stellglied über eine separate Steuerbohrung. Je nachdem, ob der Schaltkompressor fördern soll oder nicht, wird die Steuerleitung belüftet oder entlüftet.

Hierbei wird aufgrund der Verwendung eines zusätzlich vorgesehenen Vorsteuerventils noch relativ viel Zeit benötigt. Ferner sind die Druckluftversorgungseinrichtungsbaueinheiten relativ groß dimensioniert.

Es ist demnach Aufgabe der vorliegenden Erfindung, mit einfachen Mitteln hohe Schaltgeschwindigkeiten für Schaltkompressoren in oder für Druckluftversorgungseinrichtungen für Fahrzeug-Druckluftanlagen zur Verfügung zu stellen und diese in einer möglichst geringen Baugröße zu realisieren. Es ist ferner Aufgabe der vorliegenden Erfindung, die Kosten für entsprechende Druckluftversorgungseinrichtungen möglichst gering zu halten.

Gelöst wird diese Aufgabe durch eine Druckluftversorgungseinrichtung für Fahrzeug-Druckluftanlagen umfassend ein Mehrkreisschutzventil, einen Druckregler, eine Versorgungsleitung zur Versorgung der Kreise des Mehrkreisschutzventils mit Druckluft, und einen Kompressor, der mittels einer pneumatischen Schaltvorrichtung schaltbar ist, wobei ein Vorsteuerventil vorgesehen ist, das den Druckregler und die Schaltvorrichtung steuert.

Durch diese erfindungsgemäße Lösung kann ein Vorsteuerventil eingespart werden und ferner entsprechende Bohrungen zu diesem Vorsteuerventil. Durch Einsparung eines Vorsteuerventil ist es erfindungsgemäß möglich, die Baugröße entsprechender Druckluftversorgungseinrichtungen klein zu halten. Ferner sind hohe Schaltgeschwindigkeiten einfach zu erzielen, da die Ansprechzeit des Vorsteuerventils, das im Vergleich zur DE 198 34 705.7 wegfällt, nicht mehr zu berücksichtigen ist. Erfindungsgemäß schaltet ein Vorsteuerventil nämlich zugleich den Druckregler und das pneumatische Stellglied. Vorzugsweise ist die Schaltvorrichtung ein Schaltglied oder ein Stellglied. Unter Steuerung des Druckreglers wird im Rahmen dieser Erfindung insbesondere die Betätigung eines Ablaß- oder Sicherheitsventils des Druckreglers verstanden.

Vorzugsweise ist das Vorsteuerventil ein Magnetventil. Durch diese Maßnahme ist ein einfaches Ansteuern bzw. Schalten des Vorsteuerventils möglich.

Wenn vorzugsweise der Druckregler das Vorsteuerventil umfaßt, ist eine sehr kompakte Bauform möglich.

Ferner vorzugsweise ist eine Steuer- und/oder Regelelektronik vorgesehen, die das Vorsteuerventil steuert und/oder regelt. Ferner vorzugsweise verbindet die Versorgungsleitung den Druckregler mit dem Mehrkreisschutzventil.

Wenn vorzugsweise wenigstens ein Drucksensor vorgesehen ist, ist ein energiesparender Betrieb des Schaltkompressors bzw. der Druckluftversorgungseinrichtung auf einfach Art und Weise möglich.

Vorzugsweise ist wenigstens ein Drucksensor zum Messen des Drucks in der Verbindungsleitung vorgesehen. Die Verbindungsleitung ist vorzugsweise eine Belüftungsbohrung und insbesondere vorzugsweise eine zentrale Belüftungsbohrung. Vorzugsweise sind der Druckregler und das Mehrkreisschutzventil in einer Baueinheit untergebracht. Diese Baueinheit kann insbesondere vorzugsweise auch den Kompressor enthalten. Vorzugsweise ist der Druckregler elektropneumatisch. Vorzugsweise ist das Mehrkreisschutzventil elektropneumatisch. Ferner vorzugsweise ist das Mehrkreisschutzventil ein Vierkreisschutzventil.

Wenn vorzugsweise wenigstens ein Drucksensor zum Messen des Drucks in der Verbindungsleitung vorgesehen ist, kann eine sinnvolle Steuerung oder Regelung des Kompressors mittels nur des wenigstens einen Drucksensors geschehen.

Wenn vorzugsweise zwischen dem Druckregler und der Verbindungsleitung und insbesondere dem Drucksensor zum Messen des Drucks in der Verbindungsleitung ein Sperrventil, insbesondere ein Rückschlagventil, vorgesehen ist, ist ein sicherer Betrieb der Druckluftversorgungseinrichtung möglich. Wenn vorzugsweise Druck in oder hinter jedem Kreis des Mehrkreisschutzventils mittels Drucksensoren meßbar ist, ist außer der Regelung oder Steuerung des Kompressors auch die Zufuhr von Druckluft in die Verbraucherkreise und die Entnahme von Druckluft zur Überleitung von einem Kreis in den anderen steuerbar oder regelbar.

Wenn vorzugsweise zwischen dem Vorsteuerventil und dem Schaltglied eine Drossel vorgesehen ist, kann bei einem Bruch der Leitung zum Stellglied ein noch ausreichender Staudruck in der Druckluftversorgungseinrichtung vorherrschen, um den Druckregler zu schalten. Ein schnelles Schalten wird vorzugsweise dadurch realisiert, daß der Nennquerschnitt des Vorsteuerventils, insbesondere des Magnetventils, größer ist, als der Nennquerschnitt der Drossel. Je größer das Verhältnis der jeweiligen Nennquerschnitte, umso schneller ist ein Schalten insbesondere der Druckluftversorgungseinrichtung möglich. Vorzugsweise ist die Drossel in das Gehäuse einsteckbar. Ferner vorzugsweise sind Drosseln mit verschiedenen Nennquerschnitten jeweils einsteckbar.

Erfindungsgemäß ist eine Druckluftanlage mit einer Druckluftversorgungseinrichtung der vorgenannten Art versehen.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen bezüglich der Offenbarung aller im Text nicht näher erläuterten erfindungsgemäßen Einzelheiten ausdrücklich verwiesen wird. Es zeigt:

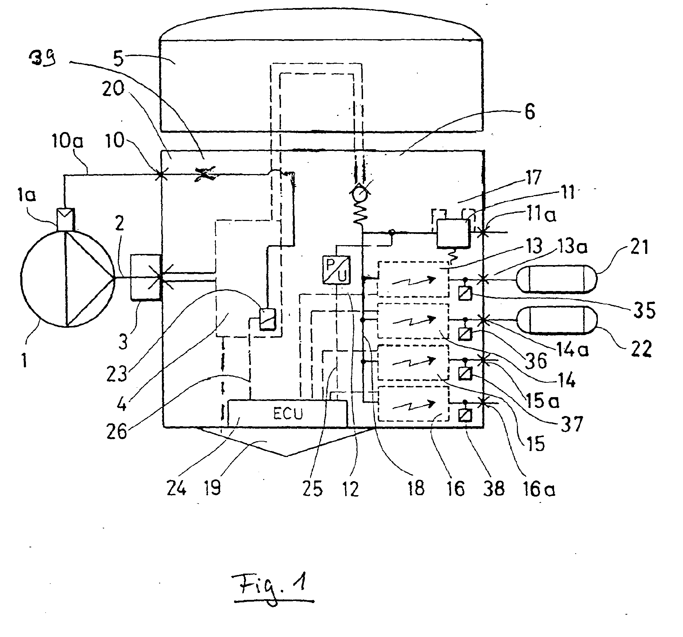

- Fig. 1: eine erfindungsgemäße Ausführungsform in schematischer Darstellung.

Fig. 1 zeigt eine erfindungsgemäße Ausführungsform einer Druckluftversorgungseinrichtung für Fahrzeug-Druckluftanlagen. Die Druckluftversorgungseinrichtung umfaßt einen Lufttrockner 5 und ein gemeinsames Gehäuse 20. Ein Energiesparkompressor 1 ist über eine Kompressorleitung 2 mit einem Eingangsstutzen 3 an dem gemeinsamen Gehäuse angebracht. In dem gemeinsamen Gehäuse sind ferner ein elektropneumatischer Druckregler 4 und ein Vierkreisschutzventil angeordnet. Die von dem Vierkreisschutzventil gelangenden Luftdrücke werden von den einzelnen Drucksteuereinheiten bzw. Kreisen 13 bis 16 über entsprechende Anschlußstutzen 13a bis 16a zu Behältern für die jeweiligen Kreise 21 und 22 geleitet. In der Fig. 1 sind lediglich zwei der vier Behälter dargestellt.

Die vom Energiesparkompressor 1 geförderte Druckluft wird über eine Kompressorleitung 2 zum Eingangsstutzen 3 der Druckluftversorgungseinrichtung zugeführt. Im Rahmen dieser Erfindung bedeutet Druckluftversorgungseinrichtung insbesondere auch eine Einrichtung, die sowohl einen Kompressor 1, die Kompressorleitung 2 und den Eingangsstutzen 3 umfaßt, als auch eine die diese Komponenten in einem gemeinsamen Gehäuse 20 beinhaltet und auch eine Einrichtung, bei der der Kompressor mittels einer Leitung mit dem Gehäuse verbindbar ist. Von dem Eingangsstutzen 3 wird Druckluft dem elektropneumatischen Druckregler 4 und danach durch die Lufttrocknerpatrone 5 geführt. Nachgeordnet ist ein Rückschlagentil 6, von dem ausgehend eine zentrale Versorgungsbohrung 18 weitergeführt wird. Von der zentralen Druckluftversorgungsbohrung 18 werden die elektromechanischen Drucksteuereinheiten 13 bis 16 mit Druckluft versorgt. Die Drucksteuereinheiten werden von der gemeinsamen Steuerelektronik 24 angesteuert und geben die Druckluft über die zugehörigen Anschlußstutzen 11a bis 16a an Druckluftkreise des Fahrzeugs ab und zwar gemäß einstellbaren und/oder vorprogrammierbaren Parametern.

Erreicht der Druck, der durch den Drucksensor 12 hinter dem Rückschlagventil 6 gemessen wird, den oberen Schwellwert, so schaltet die gemeinsame Steuerelektronik 24 die Signalleitung 26 derart, daß die pneumatische Steuerleitung 10a über den Anschluß 10 belüftet wird, wodurch das pneumatische Stellglied 1a umschaltet und der Kompressor zu fördern aufhört. Dieses geschieht mittels Steuerung oder Regelung eines Magnetventils 23, das auch zur Steuerung oder Regelung des Druckreglers 4 vorgesehen ist. Bei der Steuerung oder Regelung des Druckreglers 4 wird insbesondere ein Ablaß- oder Sicherheitsventil mittels des Magnetventils 23 betätigt. Der Meßwert des gemessenen Drucks wird über die elektrische Verbindung 25 zur Steuerelektronik 24 geleitet.

Fallt der Druck in der Leitung 18 hinter dem Rückschlagventil 6 durch beispielsweise Luftentnahme wie beispielsweise beim Abbremsen des Fahrzeuges unter einen unteren Schwellwert, so wird durch die gemeinsame Steuerelektronik 24 über die Signalleitung 26 ein Invertieren des Magnetventils 23 hervorgerufen, wodurch die pneumatische Steuerleitung 10a entlüftet wird. Das Magnetventil 23 ist so dimensioniert, daß bei einem Bruch der Leitung 10a vor der Drossel 39 noch ein hinreichender Staudruck entsteht bzw. vorhanden ist, um den elektromechanischen Druckregler 4 zu schalten. Durch das Fehlen eines weiteren Vorsteuerventils und damit das Fehlen der Ansprechzeit dieses Vorsteuerventils, wird die Steuerleitung 10a schnell entlüftet. Die Entlüftung geschieht über die Zentralentlüftung 19. Durch die Entlüftung der Steuerleitung 10a wird das pneumatische Stellglied 1a wieder in seine Ausgangslage bewegt und der Kompressor beginnt wieder zu fördern.

### Bezugszeichenliste

- 1: Energiesparkompressor
- 1a: pneumatisches Stellglied
- 2: Kompressorleitung
- 3: Eingangsstutzen
- 4: elektropneumatischer Druckregler
- 5: Lufttrocknerpatrone
- 6: Rückschlagventil
- 10: Anschluß
- 10a: pneumatische Steuerleitung
- 11: Überströmventil für Luftfederung
- 11a: Anschlußstutzen für Luftfederung
- 12: Drucksensor
- 13: elektromechanische Drucksteuereinheit für Kreis 1
- 13a: Anschlußstutzen für 13
- 14: elektromechanische Drucksteuereinheit für Kreis 2
- 14a: Anschlußstutzen für 14
- 15: elektromechanische Drucksteuereinheit für Kreis 3
- 15a: Anschlußstutzen für 15
- 16: elektromechanische Drucksteuereinheit für Kreis 4
- 16a: Anschlußstutzen für 16
- 18: zentrale Versorgungsbohrung
- 19: Zentralentlüftung
- 20: gemeinsames Gehäuse
- 21: Behälter für Kreis 1
- 22: Behälter für Kreis 2
- 23: Magnetventil
- 24: gemeinsame Steuerelektronik
- 25: elektrische Verbindung zum Drucksensor
- 26: elektrische oder elektronische Steuerleitung
- 35: Drucksensor
- 36: Drucksensor
- 37: Drucksensor
- 38: Drucksensor
- 39: Drossel

## Patentansprüche

1. Druckluftversorgungseinrichtung für Fahrzeug-Druckluftanlagen umfassend ein Mehrkreisschutzventil (13 - 16), einen Druckregler (4), eine Versorgungsleitung (18) zur Versorgung der Kreise des Mehrkreisschutzventils (13 - 16) mit Druckluft, und einen Kompressor (1), der mittels einer pneumatischen Schaltvorrichtung (1a) schaltbar ist, **dadurch gekennzeichnet, daß** ein Vorsteuerventil (23) vorgesehen ist, das den Druckregler (4) und die Schaltvorrichtung (1a) steuert.

2. Druckluftversorgungseinrichtung nach Anspruch 1, **dadurch gekennzeichnet, daß** das Vorsteuerventil (23) ein Magnetventil ist.

3. Druckluftversorgungseinrichtung nach Anspruch 1 und/ oder 2, **dadurch gekennzeichnet, daß** der Druckregler (4) das Vorsteuerventil (23) umfaßt.

4. Druckluftversorgungseinrichtung nach einem oder mehreren der Ansprüche 1 bis 3, **dadurch gekennzeichnet, daß** eine Steuer- und/oder Regelelektronik (24) vorgesehen ist, die das Vorsteuerventil steuert und/oder regelt.

5. Druckluftversorgungseinrichtung nach einem oder mehreren der Ansprüche 1 bis 4, **dadurch gekennzeichnet, daß** die Versorgungsleitung (18) den Druckregler (4) mit dem Mehrkreisschutzventil (13 - 16) verbindet.

6. Druckluftversorgungseinrichtung nach einem oder mehreren der Ansprüche 1 bis 5, **dadurch gekennzeichnet, daß** wenigstens ein Drucksensor (12, 35 - 38) vorgesehen ist.

7. Druckluftversorgungseinrichtung nach Anspruch 6, **dadurch gekennzeichnet, daß** wenigstens ein Drucksensor (12) zum Messen des Drucks in der Verbindungsleitung (18) vorgesehen ist.

8. Druckluftversorgungseinrichtung nach Anspruch 7, **dadurch gekennzeichnet, daß** zwischen dem Druckregler (4) und der Verbindungsleitung (18) und insbesondere dem Drucksensor (12) zum Messen des Drucks ein Sperrventil (6), insbesondere in Rückschlagventil, vorgesehen ist.

9. Druckluftversorgungseinrichtung nach einem oder mehreren der Ansprüche 6 bis 8, **dadurch gekennzeichnet, daß** der Druck in oder hinter jedem Kreis des Mehrkreisschutzventils (13 - 16) mittels Drucksensoren (35 - 38) meßbar ist.

10. Druckluftversorgungseinrichtung nach einem oder mehreren der Ansprüche 1 - 9, **dadurch gekennzeichnet, daß** zwischen dem Vorsteuerventil (23) und der Schaltvorrichtung (1a) eine Drossel (39) vorgesehen ist.

11. Druckluftanlage mit einer Druckluftversorgungseinrichtung nach einem oder mehreren der Ansprüche 1 bis 9.

## Claims

1. Compressed-air supply device for compressed-air systems in vehicles, comprising a multi-circuit guard valve (13 - 16), a pressure regulator (4), a supply line (18) for supplying the circuits of said multi-circuit guard valve (13 - 16) with compressed air, and a compressor (1) adapted to be switched by means of a pneumatic switching device (1a), **characterised in that** a pilot valve (23) is provided for pilot-control of said pressure regulator (4) and said switching device (1a).

2. Compressed-air supply device according to Claim 1, **characterised in that** said pilot valve (23) is a solenoid valve.

3. Compressed-air supply device according to Claim 1 and/or Claim 2, **characterised in that** said pressure regulator (4) includes said pilot valve (23).

4. Compressed-air supply device according to one or several of the Claims 1 to 3, **characterised in that** an electronic control and/or feedback control system (24) is provided for control and/or feedback control of said pilot valve.

5. Compressed-air supply device according to one or several of the Claims 1 to 4, **characterised in that** said supply line (18) connects said pressure regulator to said multi-circuit guard valve (13 - 16).

6. Compressed-air supply device according to one or several of the Claims 1 to 5, **characterised in that** at least one pressure sensor (12, 35 - 38) is provided.

7. Compressed-air supply device according to Claim 6, **characterised in that** at least one pressure sensor (12) is provided for measuring the pressure in said connecting line (18).

8. Compressed-air supply device according to Claim 7, **characterised in that** a non-return valve (6), in particular a check valve, is provided between said pressure regulator (4) and said connecting line (18) and in particular said pressure sensor (12) for measuring the pressure.

9. Compressed-air supply device according to one or several of the Claims 6 to 8, **characterised in that** the pressure in or downstream of each circuit of said multi-circuit guard valve (13 - 16) can be measured by means of pressure sensors (35 - 38).

10. Compressed-air supply device according to one or several of the Claims 1 to 9, **characterised in that** a restrictor (39) is provided between said pilot valve (23) and said switching device (1a).

11. Compressed-air system including a compressed-air supply device according to one or several of the Claims 1 to 9.

## Revendications

1. Installation d'alimentation en air comprimé pour véhicules à système à air comprimé, comprenant une soupape de protection à plusieurs circuits (13 - 16), un régulateur de pression (4), un conduit d'alimentation (18) pour l'alimentation des circuits de ladite soupape de protection à plusieurs circuits (13 - 16) en air comprimé, et un compresseur (1) apte à être commuté moyennant un dispositif commutateur pneumatique (1a), **caractérisée en ce qu'**une soupape pilote (23) est disposée pour la commande pilote dudit régulateur de pression (4) et dudit dispositif commutateur (1a).

2. Installation d'alimentation en air comprimé selon la revendication 1, **caractérisée en ce que** ladite soupape pilote (23) est une valve à solénoïde.

3. Installation d'alimentation en air comprimé selon la revendication 1 et/ou la revendication 2, **caractérisée en ce que** ledit régulateur de pression (4) contient ladite soupape pilote (23).

4. Installation d'alimentation en air comprimé selon une ou plusieurs des revendications 1 à 3, **caractérisée en ce qu'**un système électronique de commande et/ou de réglage (24) est monté pour la commande et/ou le réglage de ladite soupape pilote.

5. Installation d'alimentation en air comprimé selon une ou plusieurs des revendications 1 à 4, **caractérisée en ce que** ledit conduit d'alimentation (18) relie ledit régulateur de pression à ladite soupape de protection à plusieurs circuits (13 - 16).

6. Installation d'alimentation en air comprimé selon une ou plusieurs des revendications 1 à 5, **caractérisée en ce qu'**au moins un capteur de pression (12, 35 - 38) est installé.

7. Installation d'alimentation en air comprimé selon la revendication 6, **caractérisée en ce qu'**au moins un capteur de pression (12) est installé à mesurer la pression dans ladite conduite de connexion (18).

8. Installation d'alimentation en air comprimé selon la revendication 7, **caractérisée en ce qu'**un clapet antiretour (6), en particulier une soupape de retenue, est installé entre ledit régulateur de pression (4) et ladite conduite de connexion (18) et en particulier ledit capteur de pression (12) à mesurer la pression.

9. Installation d'alimentation en air comprimé selon une ou plusieurs des revendications 6 à 8, **caractérisée en ce que** la pression dans ou en aval de chaque circuit de ladite soupape de protection à plusieurs circuits (13 - 16) peut être mesuré moyennant des capteurs de pression (35 - 38).

10. Installation d'alimentation en air comprimé selon une ou plusieurs des revendications 1 à 9, **caractérisée en ce qu'**un étrangleur (39) est installé entre ladite soupape pilote (23) et ledit dispositif commutateur (1a).

11. Système à air comprimé comprenant une installation d'alimentation en air comprimé selon une ou plusieurs des revendications 1 à 9.
